# EUROPEAN PATENT SPECIFICATION

(11) **EP 4 147 594 B1**
(45) Date of publication and mention of the grant of the patent: **26.02.2025**
(21) Application number: 21936352.0
(22) Date of filing: 13.04.2021
(51) Int. Cl.: G05D 23/20, A24F 40/57, G05D 23/19, H05B 1/02

(54) **HEATING CONTROL METHOD AND ELECTRONIC ATOMIZATION DEVICE**
HEIZSTEUERUNGSVERFAHREN UND ELEKTRONISCHE ZERSTÄUBUNGSVORRICHTUNG
PROCÉDÉ DE COMMANDE DE CHAUFFAGE ET DISPOSITIF D'ATOMISATION ÉLECTRONIQUE

(43) Date of publication of application: 15.03.2023
(73) Proprietor: Shenzhen Smoore Technology Limited, Shenzhen, Guangdong 518102 (CN)
(72) Inventor: YANG, Jiyong, Shenzhen, Guangdong 518102 (CN); KANG, Lijun, Shenzhen, Guangdong 518102 (CN)
(74) Representative: Herrero & Asociados, S.L.
(86) International application number: PCT/CN2021/086964
(87) International publication number: WO 2022/217458

(56) References cited:
- WO-A1-2020/019123
- CN-A- 107 407 941
- CN-A- 107 692 316
- CN-A- 108 851 233
- CN-A- 108 851 242
- CN-A- 108 991 602
- CN-A- 109 002 066
- CN-A- 112 369 721
- CN-A- 112 403 405
- US-A- 6 040 560
- US-A- 6 040 560
- US-A1- 2014 270 727
- US-A1- 2015 313 284
- US-A1- 2018 042 306

## Description

### TECHNICAL FIELD

The present disclosure relates to the technical field of electronic atomization devices, and in particular to a heating control method, an electronic atomization device, and a non-transitory computer-readable storage medium.

### BACKGROUND

An electronic atomization device is a device configured to heat and atomize an aerosol-generating substance to form an aerosol, which is widely applied in fields such as medical care and electronic atomization.

Currently, the electronic atomization device has a single heating manner, which generally heats to a preset temperature by using a constant power. When a preset heating power level is higher, a heating speed may be fast, and problems such as an extremely high temperature and generation of harmful substances may be caused. When the preset heating power level is lower, a problem of a poor reduction degree of an atomizing fragrance may be caused, and a taste consistency of the aerosol formed through the atomization is poorer. Therefore, a heating control method in which the temperature increases fast and being safe is required to resolve a problem that a heating speed and the safety cannot be both ensured in existing technical solutions.

D1 (US2015/313284A1) discloses an electronic smoke apparatus. The electronic smoke apparatus comprises an inhale sensor, a smoke source containing vapor-able smoke flavored substances, an electric heater for heating up the smoke flavored substances, and a power management controller to control power supply to operate the heater; wherein the power management controller is to adaptively supply operating power to the heater according to characteristics of a smoking inhaling event detected at said inhale sensor.

D2 (US2014/270727A1) discloses a method for controlling heating of an aerosol precursor arrangement of an electronic smoking article. An average power is directed from a power source to a heating device arranged to heat the aerosol precursor arrangement and a heating time period commensurately initiated. The average power corresponds to a selected power set point associated with the power source. An actual power directed to the heating device is determined as a product of a voltage at, and a current through, the heating device. The actual power is compared to the average power, and the average power is adjusted to direct the actual power toward the selected power set point. The actual power is periodically determined and compared to the average power, and the average power adjusted toward the selected power set point, until expiration of the heating time period. An associated apparatus and computer program product are also provided.

D3 (US2018/042306A1) discloses vaporizer devices and methods for detecting inhalation through a vaporizer using a heating element. A resistive heater of a vaporizer may function as both a heater and as an anemometer to detect inhalation. Alternatively or additionally, a separate resistive heater may be included in an air path through the vaporizer to detect a user inhaling through the vaporizer. A heating control mechanism utilizes the already existing heating element in an anemometric correlation to when the vaporizer is idle and when it is being used (where being used implies the user is taking a puff/ inhalation on the vaporizer). Using this information, a controller of the vaporizer accordingly controls heating to the vaporizer as required.

### SUMMARY

A heating control method, an electronic atomization device, and a non-transitory computer-readable storage medium are provided.

A heating control method is set out as in appended claims 1 to 13.

An electronic atomization device is set out as in appended claim 14.

A non-transitory computer-readable storage medium is set out as in appended claim 14.

According to the heating control method, the electronic atomization device, and the non-transitory computer-readable storage medium provided in the present disclosure, the heating control method is applied to a heating element of an electronic atomization device. The temperature of the heating element is controlled to increase to the first preset temperature in the first time period, such that an atomizing temperature of the aerosol-generating substance may be reached quickly. The heating element is controlled to keep working under the first preset temperature in the second time period and operate the at least two different power levels in the first time period and/or the second time period, such that the atomizing temperature may be maintained above a boiling point temperature of the aerosol-generating substance and below a generation temperature of a harmful substance. In this way, an atomizing efficiency and a fragrance reduction degree may be improved without an occurrence of a problem that harmful substances such as aldehydes and ketones exceed standards. The temperature of the heating element is then controlled to decrease from the first preset temperature to the second preset temperature in the third time period, to avoid a problem that the temperature of the heating element generally rises due to a heat accumulation performance of the heating element, thereby effectively ensuring the taste consistency of the aerosol formed through the atomization. Meanwhile, a current atomization temperature is controlled to be a safe atomizing temperature to keep safe, so that a possibility of a problem of carbons depositing on a heating surface due to a relatively low atomizing temperature may be reduced, and the safety may be effectively ensured while the temperature is increased fast.

### BRIEF DESCRIPTION OF THE DRAWINGS

To describe the technical solutions in the present disclosure more clearly, the following briefly describes the accompanying drawings required for describing the embodiments. Apparently, the accompanying drawings in the following descriptions show merely some embodiments of the present disclosure, and a person of ordinary skill in the art may still derive other drawings from these accompanying drawings without creative efforts.
FIG. 1 is temperature-increasing curves of an existing electronic atomization device at different power levels.
FIG. 2 is a curve diagram of inhaling times of a user changing along with time.
FIG. 3 is a flowchart of a heating control method according to an embodiment of the present disclosure.
FIG. 4 is a flowchart of the heating control method according to another embodiment of the present disclosure.
FIG. 5 is curve diagram of temperatures change along with a heating duration when two ceramics are heated respectively based on a scheme one (A1+B 1+C1) according to an embodiment of the present disclosure.
FIG. 6 is curve diagram of the temperatures change along with the heating duration when the two ceramics are heated respectively based on a scheme two (A1+B2+C1) according to an embodiment of the present disclosure.
FIG. 7 is a curve diagram of the temperatures change along with the heating duration when the two ceramics are heated respectively based on a scheme three (A1+B3+C1) according to an embodiment of the present disclosure.
FIG. 8 is a curve diagram of the temperatures change along with the heating duration when the two ceramics are heated respectively based on a scheme four (A1+B4+C1) according to an embodiment of the present disclosure;
FIG. 9 is a curve diagram of the temperatures change along with the heating duration when the two ceramics are heated respectively based on a scheme five (A2+B1+C1) according to an embodiment of the present disclosure;
FIG. 10 is a curve diagram of the temperatures change along with the heating duration when the two ceramics are heated respectively based on a scheme six (A2+B2+C1) according to an embodiment of the present disclosure;
FIG. 11 is a curve diagram of the temperatures change along with the heating curation when the two ceramics are heated respectively by using a scheme seven (A2+B3+C1) according to an embodiment of the present disclosure;
FIG. 12 is a curve diagram of the temperatures change along with the heating curation when the two ceramics are heated respectively based on a scheme eight (A2+B5+C1) according to an embodiment of the present disclosure;
FIG. 13 is a structural schematic diagram of an electronic atomization device according to an embodiment of the present disclosure; and
FIG. 14 is a structural schematic diagram of a non-transitory computer-readable storage medium according to an embodiment of the present disclosure.

### DETAILED DESCRIPTION

The present disclosure is described in detail below with reference to the accompanying drawings and embodiments.

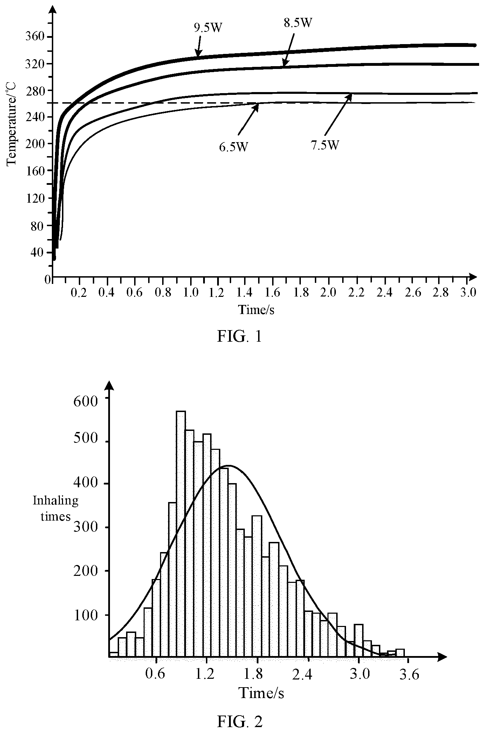

The applicant researches the temperature-increasing curves of an electronic atomization device at different power levels and the inhaling times of a user changing along with time. As shown in FIG. 1, FIG. 1 is temperature-increasing curves of an existing electronic atomization device at different power levels. When a heating power level is 6.5 W, a thermal equilibrium may be reached in response to heating for 1.5 seconds, and a temperature of the thermal equilibrium maybe 246 °C. When the heating power level is 7.5 W, the thermal equilibrium may be reached in response to heating for 0.8 seconds, and the temperature of the thermal equilibrium may be262 °C. When the heating power level is 8.5 W, the thermal equilibrium may be reached in response to heating for 0.25 seconds, and the temperature of the thermal equilibrium may be 302 °C. When the heating power level is 9.5 W, the thermal equilibrium may be reached in response to heating for 0.1 seconds, and the temperature of the thermal equilibrium temperature may be 340 °C. As can be known, when the heating power level of the electronic atomization device 100 is excessively high, a problem of an excessively high temperature and harmful substances such as heavy metals and the aldehydes and the ketones exceeding the standards may be caused. When the heating power level is excessively low, a problem that the poor reduction degree of the atomizing fragrance may be caused. As shown in FIG. 2, FIG. 2 is a curve diagram of inhaling times of a user changing along with time. A number of sampled persons is 40, and inhale times of each person is 200. As can be known from FIG. 2, although an inhaling habit of each user varies, the inhaling times of each user is concentrated around 0.6 seconds to 2.5 seconds. Meanwhile, since the inhale habits of users are different, in a process of heating continuously or repeatedly by means of the same mode, differences in changes of temperatures gradually increasing of the heating element 101 may be great, leading to a poorer taste consistency of the aerosol formed through the atomization.

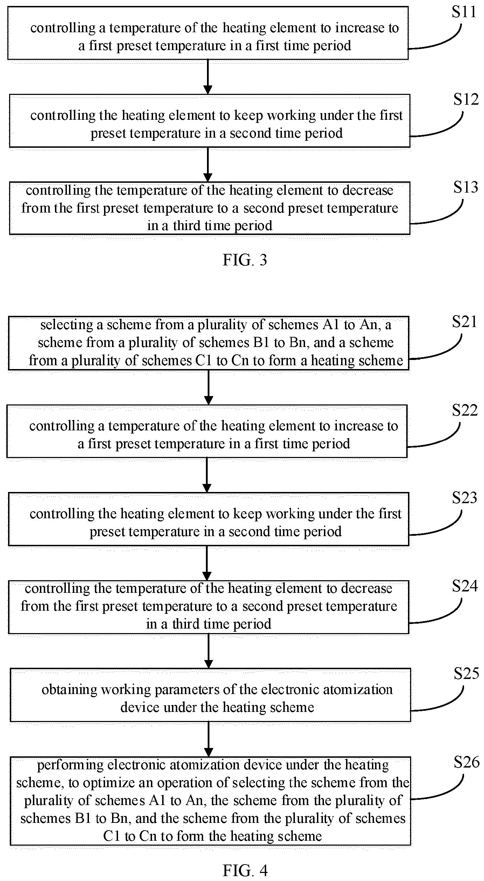

Referring to FIG. 3, FIG. 3 is a flowchart of a heating control method according to an embodiment of the present disclosure. In the present embodiment, the heating control method is provided, and the heating control method may be applied to the heating element 101 of the electronic atomization device 100. The electronic atomization device 100 is configured to heat and atomize an aerosol-generating substance to generate the aerosol, the aerosol-generating substance is a liquid or a solid including components such as flavor materials or effective materials. The effective materials may be nicotine or nicotine salt. The electronic atomization device 100 includes an atomizer and a body unit. The atomizer is detachably connected to the body unit. The atomizer is configured to heat and atomizer the aerosol-generating substance when being energized. A power supply assembly is disposed in the body unit, and the atomizer is inserted and connected to an interface of an end of the body unit and connected to the power supply assembly in the body unit, so that the power level is supplied to the atomizer through the power supply assembly. When the atomizer needs to be replaced, the atomizer may be detached and a new atomizer is installed on the body unit to reuse the body unit. Certainly, the electronic atomization device 100 further includes other components in the existing electronic atomization device such as a microphone head and a holder, and structures and functions of these components are the same as or similar to those in the related art. For details, reference may be made to the related art, and the details are not repeated herein.

The heating control method includes the following operations.

In an operation S11, the method may include controlling a temperature of the heating element to increase to a first preset temperature in a first time period.

In the first time period, a constant power level may be applied for heating, or at least two different power levels may be applied for heating.

In an embodiment, in the first time period, at least two different power levels are operated for heating, to control the temperature of the heating element 101 to increase from an environment temperature to the first preset temperature. A duration of the first time period may be less than or equal to 0.5 seconds, so as to reduce a preheating duration, accelerate heating, and improve an atomizing efficiency. The first preset temperature is greater than or equal to a boiling point temperature of the current aerosol-generating substance and is less than a generating temperature of a harmful substance. For example, a liquid aerosol-generating substance generally includes vegetable glycerine (VG), propylene glycol (PG), and fragrances in different flavors. A boiling point of the PG is around 185°C, and a boiling point of the VG is around 290°C. Although a higher temperature is helpful to improving an atomizing amount, when the temperature is excessively high, the aerosol-generating substance may be resolved into the harmful substances such as the aldehydes and the ketones. Therefore, based on a comprehensive consideration, a current heating temperature is controlled to reach the atomizing temperature of the aerosol-generating substance quickly, so as to facilitate atomizing the aerosol-generating substance and reduce the possibility of the problem that the harmful substances such as the aldehydes and the ketones exceed the standards. A setting range of the first preset temperature may be from 220°C to 320°C. In some embodiments, the setting range of the first preset temperature may be from 250°C to 300°C. It may be understood that, the first preset temperature may be any one of 250°C, 280°C, or 300°C in the foregoing range. Meanwhile, according to a requirement of an actual temperature controlling accuracy, the first preset temperature may alternatively be a range fluctuating within a preset range amplitude. For example, the first preset temperature is 280°C, but an actual temperature ranges from 270°C to 290°C.

In an embodiment, the at least two different power levels are operated sequentially in a descending order for heating. A range of each power level may be from 8 W to 11 W. In addition, heating durations at the at least two different power levels may be the same or different. It may be understood that, heating sequentially in the descending order of power level may smooth a temperature-increasing curve, so that a temperature of the first time period of a temperature-increasing stage may be transitioned to the first preset temperature smoothly, and an occurrence of the temperature of the heating stage being higher than the first preset temperature nay be reduced.

In an implementation process, three different power level with the same heating durations are operated for heating. In the present embodiment, the operation S11 may adopt any scheme of the following two schemes. Scheme one A1, in the first time period, the heating element 101 is controlled to operate at 11 W for 0.1 seconds, then operate at 9 W for 0.1 seconds, and operate at 8 W for 0.1 seconds to increase the temperature from the environment temperature to the first preset temperature. In this implementation scheme, the range of the first preset temperature may be from 310°C to 320°C. Scheme two A2, in the first time period, the heating element 101 is controlled to operate at 10 W for 0.1 seconds, then operate at 9 W for 0.1 seconds, and operate at 8 W for 0.1 seconds to increase the temperature from the environment temperature to the first preset temperature. In this implementation scheme, the range of the first preset temperature may be from 290°C to 300°C.

Certainly, in other embodiments, the first time period may be shorter, so that a constant heating power level may be continuously operated in the first time period for heating. For example, in a scheme three or a scheme four, the heating element 101 is controlled to increase the temperature from the environment temperature to the first preset temperature in the first time period. The scheme three A3 is, in the first time period, the heating element 101 is controlled to operate at 10 W for 0.2 seconds to increase the temperature from the environment temperature to the first preset temperature. The scheme four A4 is, in the first time period, the heating element 101 is controlled to operate at 10 W for 0.4 seconds to increase the temperature from the environment temperature to the first preset temperature.

In an operation S12, the method may include controlling the heating element to keep working under the first preset temperature in a second time period. The minimum heating power level in the first time period is greater than or equal to the maximum heating power level in the second time period, such that a temperature may be quickly increased in the first time period, and a problem of generating the harmful substances due to an excessively high temperature caused by an excessively high heating power level may be reduced in the second time period. The constant power level or the at least two different power levels may be operated for heating in the second time period. However, the heating element 101 is controlled to operate the at least two different power levels in at least one of the first time period and the second time period.

In an embodiment, when the at least two different power levels are operated for heating in the first time period, for example, the operation S11 is performed based on the scheme one A1 or the scheme two A2, in the operation S12, the constant heating power level may be operated for heating to keep working under the first preset temperature. For example, a scheme one B1 or a scheme two B2 is applied for heating in the second time period. The scheme one B 1: the heating element 101 is controlled to operate 6.5 W for 2.7 seconds in the second time period to keep working under the first preset temperature. The scheme two B2: the heating element 101 is controlled to operate 7 W for 2.7 seconds in the second time period to keep working under the first preset temperature.

Certainly, the at least two different power levels are operated for heating in the second time period to control the heating element 101 to keep working under the first preset temperature. It should be noted that, in this case, the constant power level may be operated for heating in the first time period. A duration of the second time period may range from 2 seconds to 3 seconds. The first preset temperature is greater than or equal to the boiling point temperature of the aerosol-generating substance and is less than the generating temperatures of the harmful substances such as the aldehydes and the ketones, so that not only the atomizing efficiency of the electronic atomization device 100 can be ensured, the possibility of the problem of the harmful substances exceeding the standards may be also reduced.

When the at least two different power levels are operated for heating in the second time period, in the operation S12, the at least two different power levels are operated for heating circularly and alternately, and the heating durations of the at least two different power levels may be the same or different. A range of each power level in the at least two different power levels in the operation S12 may be from 6 W to 7.5 W.

In an embodiment, the heating durations of the at least two different power levels are the same. For example, one of two power levels which are operated circularly and alternately for heating is 6.5 W, the other one of the two power levels is 7 W, and the heating durations are 0.1 seconds, 0.2 seconds, or 0.3 seconds. The operation S12 may be performed through any one of the following three schemes. Scheme three B3: the heating element 101 is controlled to operate 6.5 W for 0.1 seconds, operate 7 W for 0.1 seconds, operate 6.5 W for 0.1 seconds, operate 7 W for 0.1 seconds, and the above process is performed alternately and circularly for a preset duration. Scheme four B4: the heating element 101 is controlled to operate 6.5 W for 0.2 seconds, operate 7 W for 0.2 seconds, operate 6.5 W for 0.2 seconds, and operate 7 W for 0.2 seconds, and the above process is performed alternately and circularly for the preset duration. Scheme five B5: the heating element 101 is controlled to operate 6.5 W for 0.3 seconds, operate 7 W for 0.3 seconds, operate 6.5 W for 0.3 seconds, operate 7 W for 0.3 seconds, and the above process is performed alternately and circularly for the preset duration. The preset duration is a duration of the second time period. The preset duration may be a standard inhaling duration of a single inhale of the user, which may be 3 seconds. It may be understood that, the at least two different power levels being operated for heating circularly and alternately may better control the heating temperature to be less than the first preset temperature, such that a possibility of generating the harmful substances due to the excessively high temperature may be reduced and an extremely high atomizing efficiency may be ensured.

In another embodiment, the heating durations of the at least two different power levels are different. For example, one of the two power levels which are operated circularly and alternately is 6.5 W, the other of the two power levels is 7 W, and the heating durations are 1.2 seconds or 0.3 seconds. The operation S12 may be performed through any one of the following two schemes. scheme six B6: the heating element 101 is controlled to operate 6.5 W for 1.2 seconds, operate 7 W for 0.3 seconds, operate 6.5 W for 1.2 seconds, operate 7 W for 0.3 seconds, and this process is performed alternately and circularly for the preset duration. Scheme seven B7: the heating element 101 is controlled to operate 7 W for 1.2 seconds, operate 6.5 W for 1.2 seconds, operate 7 W for 1.2 seconds, and operate 6.5 W for 1.2 seconds, and this process is performed alternately and circularly for the preset duration.

In an embodiment, the scheme two A2 and the scheme six B6 may be adopted, which can not only improve the atomizing efficiency and the fragrance reduction degree, but also can reduce a problem of the temperature of the heating element 101 being excessively high and the harmful substances exceeding the standards.

in an operation S13, the method may include controlling the temperature of the heating element to decrease from the first preset temperature to a second preset temperature in a third time period.

The second preset temperature is lower than the first preset temperature, to reduce a possibility of a problem that the temperature of the heating element 101 gradually increases due to the heat accumulation performance of the heating element 101, such that the taste consistency of the aerosol formed through the atomization may be effectively ensured. Meanwhile, the current atomizing temperature is controlled to be a safe atomizing temperature to keep safe, so that the possibility of the problem of the carbons depositing on the heating surface due to the lower atomizing temperature may be reduced. In addition, it is also ensured that the first preset temperature can be quickly reached during a next inhale. A setting range of the second preset temperature may be from 220°C to 280°C.

The heating element 101 may be controlled to operate the constant power level in the third time period. A power range of the constant heating power level may be from 4.5 W to 5.5 W. In some embodiments, the constant power level may be 4.5 W. A duration range of the third time period may be from 2.5 seconds to 3 seconds. In an embodiment, the duration range of the third time period may be 2 seconds. The operation S13 may be performed based on a scheme one C1 or a scheme two C2. The scheme one C1 is to operate 4.5 W for 2 seconds, and the scheme two C2 is to operate 5 W for 2 seconds.

A duration that the temperature of the heating element 101 decreases from the first preset temperature to the second preset temperature may be less than or equal to 0.6 seconds, such that the problem of the harmful substances such as the aldehydes and the ketones or the heavy metals exceeding the standards due to the temperature being increasing continuously.

In an embodiment, the first time period, the second time period, and the third time period are time periods that are consecutive in time, so that the heating element 101 keeps working for atomizing to form the aerosol.

According to the heating control method provided in the present embodiment, the heating element 101 is controlled to increase the temperature to the first preset temperature in the first time period, so that the atomizing temperature of the aerosol-generating substrate is quickly reached. The heating element 101 is then controlled to keep working under the first preset temperature with the second time period, and the heating element 101 is controlled to operate the at least two different power levels in the first time period and/or the second time period. Therefore, the atomizing temperature is maintained above the boiling point of the aerosol-generating substance and below the generating temperatures of the harmful substances such as the aldehydes and the ketones or the heavy metals, such that the occurrence of the problem of the harmful substances such as the aldehydes and the ketones exceeding the standards may be reduced while the atomizing efficiency and the fragrance reduction degree are improved. The temperature of the heating element 101 is then controlled to decrease from the first preset temperature to the second preset temperature in the third time period and keep working under the second preset temperature for the preset duration, such that the problem of the temperature of the heating element 101 being generally increasing due to the heat accumulation performance of the heating element 101, and the taste consistency of the aerosol formed through the atomization may be ensured. Meanwhile, the current atomizing temperature is controlled to be the safe atomizing temperature to keep the safe, so that the possibility of the problem of the carbons depositing on the heating surface due to the relatively lower atomizing temperature may be reduced. Further, the safety can be effectively ensured while the temperature is increased quickly.

In another embodiment, referring to FIG. 4, FIG. 4 is a flowchart of the heating control method according to another embodiment of the present disclosure. In the present embodiment, another heating control method is provided. A plurality of schemes A1 to An configured to control the heating element 101 to operate the at least two different power levels or the constant power level in the first time period, a plurality of schemes B1 to Bn configured to control the heating element 101 to operate the at least two different power levels or the constant power level in the second time period, and a plurality of schemes C1 to Cn configured to control the heating element 101 to operate the constant power level in the third time period may be stored in the electronic atomization device 100. The plurality of schemes A1 to An may include any one or more of the A1, A2, A3, and A4 involved in the foregoing embodiments. The plurality of schemes B1 to Bn may include any one or more of the B1, B2, B3, B4, B5, B6, and B7 involved in the foregoing embodiments. The plurality of schemes C1 to Cn may include any one or more of the C1 and C2 involved in the foregoing embodiments. It may be understood that, n is a natural number; and n may beset according to a hardware indicator such as an internal memory.

The heating control method includes the following operations S21-S26.

In an operation S21: selecting a scheme from the plurality of schemes A1 to An, a scheme from the plurality of schemes B1 to Bn, and a scheme from the plurality of schemes C1 to Cn to form a heating scheme.

In an implementation process, parameters of the electronic atomization device 100 or inhaling habit parameters of the user are obtained. The parameters of the electronic atomization device 100 include a parameter of an atomizing substance or a parameter of an atomizer. The scheme of the plurality of schemes A1 to An, the scheme of the plurality of schemes B1 to Bn, and the scheme of the plurality of schemes C1 to Cn are selected based on the parameters of the electronic atomization device 100 or the inhaling habit parameters of the user to form the heating scheme. Different power levels are operated for heating in at least one scheme of the schemes selected from the plurality of schemes A1 to An and the plurality of schemes B1 to Bn. The inhaling habit parameters of the user include a single inhaling duration of the user. It is detected that the inhaling habit of the user is that the single inhaling duration is 3 seconds. It may be understood that, in this case, a total heating duration of the heating scheme formed by the scheme selected from the plurality of schemes A1 to An, the scheme selected from the plurality of schemes B1 to Bn, and the scheme selected from the plurality of schemes C1 to Cn is 3 seconds. In other implementations, the total heating duration may be another inhaling duration of the user, such as 2.5 seconds, 4 seconds, or 5 seconds.

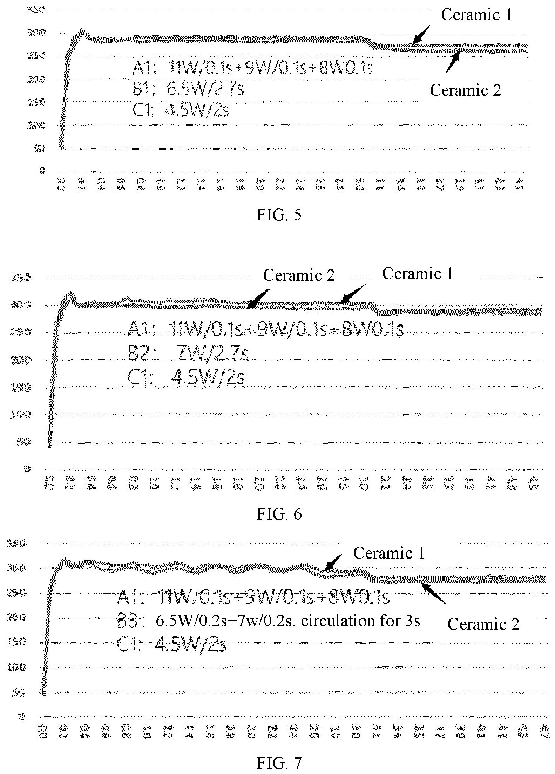

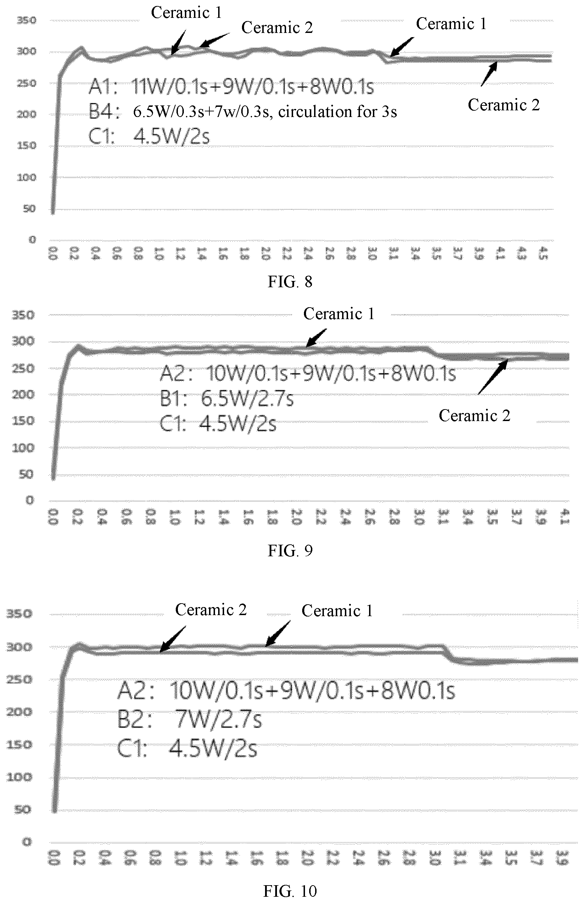

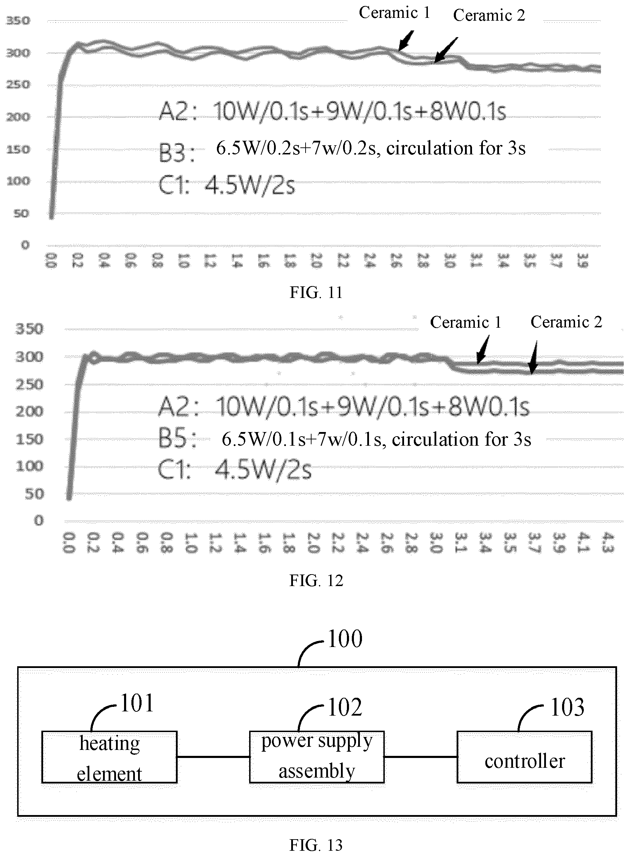

In an embodiment, four different schemes of A1/A2+B1/B2+C1 and four different schemes A1/A2+B3/B4/B5+C1 are selected to research changes of temperatures of two kinds of ceramics along with a heating duration. For details, reference may be made to FIG. 5 to FIG. 12 and Table 1. FIG. 5 is curve diagram of temperatures change along with a heating duration when two ceramics are heated respectively based on a scheme one (A1+B1+C1) according to an embodiment of the present disclosure. FIG. 6 is curve diagram of temperatures change along with the heating duration when the two ceramics are heated respectively based on a scheme two (A1+B2+C1) according to an embodiment of the present disclosure. FIG. 7 is curve diagram of temperatures change along with the heating duration when the two ceramics are heated respectively based on a scheme three (A1+B3+C1) according to an embodiment of the present disclosure. FIG. 8 is curve diagram of temperatures change along with the heating duration when the two ceramics are heated respectively based on a scheme four (A1+B4+C1) according to an embodiment of the present disclosure. FIG. 9 is curve diagram of temperatures change along with the heating duration when the two ceramics are heated respectively based on a scheme five (A2+B1+C1) according to an embodiment of the present disclosure. FIG. 10 is curve diagram of temperatures change along with the heating duration when the two ceramics are heated respectively based on a scheme six (A2+B2+C1) according to an embodiment of the present disclosure. FIG. 11 is curve diagram of temperatures change along with the heating duration when the two ceramics are heated respectively based on a scheme seven (A2+B3+C1) according to an embodiment of the present disclosure. FIG. 12 is curve diagram of temperatures change along with the heating duration when the two ceramics are heated respectively based on a scheme eight (A2+B5+C1) according to an embodiment of the present disclosure.

As can be known from FIG. 5 to FIG. 12, an average temperature of the scheme one B1 is lower than an average temperature of the scheme two B2 by 8°C to 16°C, and the maximum temperature of the scheme one A1 is higher than the maximum temperature of the scheme one A2 by 5°C to 15°C.

**Table 1 shows performance parameters corresponding to eight different schemes.**

| Serial number of schemes | Scheme combination | Maximum temperature in the first time period (°C) | Duration corresponding to the first time period (s) | Average temperature in the second time period (°C) | Total power level consumption of a single inhaling duration (mW) |
|---|---|---|---|---|---|
| Scheme one | A1+B1+C1 | 312 | 0.2 | 289 | 20.3 |
| Scheme two | A1+B2+C1 | 316 | 0.2 | 305 | 21.7 |
| Scheme three | A1+B3+C1 | 318 | 0.2 | 304 | 20.95 |
| Scheme four | A1+B4+C1 | 305 | 0.2 | 293 | 20.9 |
| Scheme five | A2+B1+C1 | 296 | 0.2 | 287 | 20.2 |
| Scheme six | A2+B2+C1 | 306 | 0.2 | 300 | 21.6 |
| Scheme seven | A2+B3+C1 | 309 | 0.2 | 304 | 20.85 |
| Scheme eight | A2+B5+C1 | 302 | 0.2 | 291 | 20.8 |

The single inhaling duration is 3 seconds. As can be known from Table 1, the maximum temperature in the scheme two A2 is below 310°C, which is relatively safe. The heating durations are all 0.2 seconds, which meets a requirement of increasing the temperature quickly. Therefore, in an implementation process, the scheme two A2 is adopted in the first time period. In addition, constant temperature stages of the scheme five and the scheme six adopt constant power level, and the scheme seven and the scheme eight adopt pulse power level. In an implementation process, two modes respectively select two schemes to test two samples and with mung bean e-liquid. Detection results may refer to Table 2 and Table 3. A power level corresponding to a contrasted group may be 6.5 W.

**Table 2 shows test results obtained by testing two different samples based on the scheme five to the scheme eight with different power level in combination with the control group.**

| | Contrasted group 6.5 W | | Scheme five | | Scheme six | | Scheme seven | | Scheme eight | |
|---|---|---|---|---|---|---|---|---|---|---|
| | Sample 1 | Sample 2 | Sample 1 | Sample 2 | Sample 1 | Sample 2 | Sample 1 | Sample 2 | Sample 1 | Sample 2 |
| Inhaling force (Kpa) | 0.92 | 0.73 | 0.71 | 0.80 | 0.81 | 0.73 | 0.79 | 0.76 | 0.78 | 0.74 |
| Inhaling times | ΔM/mg | ΔM/mg | ΔM/mg | ΔM/mg | ΔM/mg | ΔM/mg | ΔM/mg | ΔM/mg | ΔM/mg | ΔM/mg |
| 25 | 7.16 | 6.72 | 7.40 | 7.13 | 8.86 | 8.34 | 8.14 | 8.20 | 8.46 | 8.14 |
| 50 | 7.42 | 6.71 | 7.43 | 7.66 | 8.52 | 8.00 | 8.27 | 8.46 | 7.96 | 8.42 |
| 75 | 7.21 | 6.86 | 7.72 | 7.32 | 8.41 | 8.41 | 8.44 | 8.12 | 8.16 | 8.16 |
| 100 | 7.10 | 6.91 | 7.93 | 6.93 | 8.70 | 7.90 | 7.97 | 8.07 | 8.61 | 8.07 |
| 125 | 7.18 | 6.71 | 7.62 | 7.29 | 8.26 | 8.66 | 8.42 | 8.16 | 8.46 | 8.12 |
| 150 | 7.31 | 6.77 | 7.85 | 6.94 | 8.84 | 8.44 | 8.14 | 8.38 | 8.14 | 8.04 |
| 175 | 7.26 | 6.36 | 8.03 | 7.82 | 8.58 | 8.54 | 8.01 | 8.45 | 8.22 | 8.43 |
| Minimum value | 7.10 | 6.36 | 7.40 | 6.93 | 8.26 | 7.90 | 7.97 | 8.07 | 7.96 | 8.04 |
| Maximum value | 7.42 | 6.91 | 8.03 | 7.82 | 8.86 | 8.66 | 8.44 | 8.46 | 8.61 | 8.43 |
| Average vapor amount (mg/puff) | 7.23 | 6.72 | 7.71 | 7.30 | 8.60 | 8.33 | 8.20 | 8.26 | 8.29 | 8.19 |

**Table 3 shows the atomizing efficiency corresponding to the scheme five to the scheme eight with different power level and the contrasted group.**

| | Atomizing amount (mg/puff) | Total power level consumption of a single inhaling duration (mW) | Atomizing efficiency |
|---|---|---|---|
| Constant power level 6.5 W | 6.97 | 19.5 | 49% |
| Scheme five with different power levels | 7.52 | 20.2 | 53% |
| Scheme six with different power levels | 8.47 | 21.6 | 55% |
| Scheme seven with different power levels | 8.23 | 20.85 | 54% |
| Scheme eight with different power levels | 8.24 | 20.8 | 54% |

As can be known from Table 3, the atomizing efficiency of the scheme of the at least two different power levels being operated for heating provided in the present disclosure is improved by 4% to 6% when compared with the scheme of the constant power level of 6.5 W being operated for heating in the contrasted group.

**Table 4 shows taste results corresponding to the scheme five to the scheme eight with different power level and the contrasted group.**

| | Sample 1 | Sample 2 | Sample 3 | Sample 4 |
|---|---|---|---|---|
| Contrasted group (6.5 W) | Sense of satisfaction | Relatively weak | Intermediate | Intermediate |
| | Fragrance concentration | Intermediate | Intermediate | Intermediate |
| | Fragrance reduction degree | Intermediate | Intermediate | Relatively good |
| | Throat striking sense | Relatively weak | Intermediate | Relatively strong |
| Scheme five | Sense of satisfaction | Relatively weak | Intermediate | Intermediate |
| | Fragrance concentration | Intermediate | Intermediate | Relatively good |
| | Fragrance reduction degree | Relatively good | Relatively good | Relatively good |
| | Throat striking sense | Relatively weak | Intermediate | Relatively strong |
| Scheme six | Sense of satisfaction | Relatively weak | Intermediate to relatively strong | Intermediate |
| | Fragrance concentration | Intermediate | Intermediate | Intermediate |
| | Fragrance reduction degree | Relatively good | Relatively good | Intermediate |
| | Throat striking sense | Relatively good | Intermediate to relatively strong | Relatively strong |
| Scheme seven | Sense of satisfaction | Intermediate | Intermediate to relatively strong | Intermediate to relatively strong |
| | Fragrance concentration | Intermediate | Intermediate to relatively good | Relatively good |
| | Fragrance reduction degree | Relatively good | Relatively good | Intermediate |
| | Throat striking sense | Relatively weak | Intermediate to relatively strong | Relatively strong |
| Scheme eight | Sense of satisfaction | Relatively weak | Intermediate to relatively strong | Intermediate |
| | Fragrance concentration | Intermediate | Intermediate to relatively good | Relatively good |
| | Fragrance reduction degree | Relatively good | Relatively good | Intermediate |
| | Throat striking sense | Relatively weak | Intermediate to relatively strong | Relatively strong |

As can be known from Table 4, compared with the constant power level of 6.5 W, the scheme of adopting the at least two different power levels has improvements on aspects such as the vapor amount, the fragrance reduction degree, and the fragrance concentration. In addition, on the whole, performances of indicators of the scheme seven is the best. Therefore, in an implementation process, the scheme seven may be selected to perform a heating control.

**Table 5 shows test results of e-liquid frying sound under different inhale times corresponding to the scheme five to the scheme eight with different power level and the contrasted group.**

| | Contrasted group 6.5 W | Scheme five | Scheme six | Scheme seven | Scheme eight |
|---|---|---|---|---|---|
| First inhale | Relatively small | Relatively great | Relatively great | Relatively great | Relatively great |
| Second inhale | Relatively great | Relatively great | Relatively great | Relatively great | Relatively great |
| Third inhale | Relatively small | Relatively great | Relatively great | Relatively great | Relatively great |
| Fourth inhale | Relatively small | Relatively great | Relatively great | Relatively great | Relatively small |
| Fifth inhale | None | Relatively great | Relatively great | Relatively great | Relatively great |
| Sixth inhale | Relatively small | Relatively great | Relatively great | Relatively small | Relatively small |
| Seventh inhale | None | Relatively small | Relatively great | Relatively great | Relatively great |
| Eighth inhale | Relatively great | Relatively great | Relatively great | Relatively small | Relatively small |
| Ninth inhale | Relatively small | Relatively great | Relatively great | None | Relatively great |
| Tenth inhale | Relatively small | Relatively great | Relatively great | Relatively great | Relatively great |

It should be noted that, in a test process, after a first inhale, a preset time is required to be waited to completely cool down an atomizer and a second inhale is performed. The preset time may be 3 minutes, 5 minutes, or 6 minutes. As can be known from Table 5, compared with the scheme of operating the constant power level of 6.5 W for heating, the e-liquid frying sound of a cotton-core cartridge is more apparent in a process of increasing the temperature quickly according to the scheme of operating the at least two different power levels. In addition, differences between e-liquid frying sounds of the four schemes from the scheme five to the scheme eight of operating the at least two different power levels are relatively smaller.

In an operation S22, the method may include controlling a temperature of the heating element to increase to a first preset temperature in a first time period.

In an operation S23, the method may include controlling the heating element to keep working under the first preset temperature in a second time period.

In an operation S24, the method may include controlling the temperature of the heating element to decrease from the first preset temperature to a second preset temperature in a third time period.

The operations S22 to S24 are performed according to the heating scheme formed through selecting in the operation S21. An implementation process is the same as or similar to the implementation process of the operations S11 to S13 according to in a first embodiment, and the same or similar technical effects may be also implemented. For details, reference may be made to the foregoing related descriptions, and details are not described herein again.

In an operation S25, the method may include obtaining working parameters of the electronic atomization device under the heating scheme.

The parameters of the electronic atomization device 100 include a parameter of an atomizing substance or a parameter of an atomizer. The atomizing substance may be the liquid or the solid including the components such as the flavor materials or the effective materials, and the effective materials may be the nicotine or the nicotine salt. The parameters of the atomizer may include a current heating power level, a heating duration, or a heating temperature.

In an operation S26, the method may include performing a self-learning based on the working parameters of the electronic atomization device under the heating scheme, to optimize an operation of selecting the scheme from the plurality of schemes A1 to An, the scheme from the plurality of schemes B1 to Bn, and the scheme from the plurality of schemes C1 to Cn to form the heating scheme.

As can be known in combination with the foregoing data, according to the heating control method provided in the embodiments of the present disclosure, the atomizing efficiency may be improved by 4% to 6%, the fragrance reduction degree is also improved apparently, and an e-liquid frying frequency of a universal cotton-core product is increased and the sound of the universal cotton-core product is more apparent.

According to the heating control method provided in the embodiments, the plurality of different schemes are pre-stored in the electronic atomization device 100, so that in a heating process, different schemes may be matched based on different atomizing substances and different atomizers and the heating scheme may be formed by combining these schemes. Therefore, the heating control is performed in different time periods based on the selected schemes, so that an occurrence of a problem of the temperature of the heating element being excessively high the harmful substances exceeding the standards, and the carbons depositing on the heating surface due to the relatively lower atomizing temperature may be reduced while the atomizing efficiency may be ensured. In this way, the safety may be effectively ensured while the temperature is increased quickly. Meanwhile, the taste consistency of the aerosol formed through the atomization may be effectively ensured.

Referring to FIG. 13, FIG. 13 is a structural schematic diagram of an electronic atomization device according to an embodiment of the present disclosure. In this embodiment, an electronic atomization device 100 is provided and includes a heating element 101, a power supply assembly 10, and a controller 103.

In an embodiment, the heating element 101 is disposed on a porous ceramic in the atomizer, and the power supply assembly 102 and the controller 103 are disposed on a battery holder of a body unit. The atomizer and the body unit may be an integral structure or may be detachably connected.

The heating element 101 is configured to heat an aerosol-generating substance. The aerosol-generating substance may be a tobacco or an e-liquid. The heating element 101may be made of a temperature-controlling heating material, and certainly may alternatively be made of a non-temperature-controlling heating material. The temperature-controlling heating material is a material with a larger temperature coefficient of resistance(TCR) value, and the non-temperature-controlling heating material is a material with a smaller TCR value.

The power supply assembly 102 is connected to the heating element 101 and is configured to supply power to the heating element 101.

In an embodiment, the power supply assembly 102 may be disposed in the body unit of the electronic atomization device 100 and may be a rechargeable battery or a battery group. The controller 103 may be a chip or a PCB. The controller 103 is connected between the power supply assembly 102 and the heating element 101, and is configured to receive a starting instruction of a user and control the power supply assembly 102 to supply the power to the heating element 101 based on the starting instruction.

In an embodiment, the controller 103 controls a temperature of the heating element 101 to increase from an environment temperature to a first preset temperature in a first time period; the controller 103 controls the heating element 101 to keep working under the first preset temperature in a second time period; and the controller 103 controls the temperature of the heating element 101 to decrease from the first preset temperature to a second preset temperature in a third time period and keep working under the second preset temperature for a preset duration. The heating element 101 is controlled to operate at least two different power levels in the first time period and/or the second time period.

According to the electronic atomization device 100 provided in the embodiments, the heating element 101 is configured to heat an aerosol-generating substance. Meanwhile, the power supply assembly 102 connected to the heating element 101 is configured to supply the power to the heating element 101. In addition, the controller 103 connected to the power supply assembly 102 and the heating element 101 is configured to control the temperature of the heating element 101 to increase from the environment temperature to the first preset temperature in the first time period, such that the atomizing temperature of the aerosol-generating substance may be quickly reached. The heating element 101 is controlled to keep working under the first preset temperature in the second time period, and the heating element 101 is controlled to operate different power level in the first time period and/or the second time period, to maintain the atomizing temperature to be above the boiling point of the aerosol-generating substance and below the generating temperatures of harmful substances, so as to improve the atomizing efficiency and the fragrance reduction degree and reduce the possibility of the problem of the temperature of the heating element 101 being excessively high and the harmful substances exceeding the standards. The temperature of the heating element 101 is controlled to decrease from the first preset temperature to the second preset temperature in the third time period and keep working under the second preset temperature for the preset duration, such that the possibility of the problem of the temperature of the heating element 101 generally increasing due to the heat accumulation performance of the heating element 101, and the taste consistency of the aerosol formed through the atomization may be effectively ensured. Meanwhile, the current atomizing temperature is controlled to be the safe atomizing temperature to keep the safe, so that the possibility of the problem of the carbons depositing on the heating surface due to the relatively lower atomizing temperature may be reduced. Further, the safety may be effectively ensured while the temperature is increased quickly.

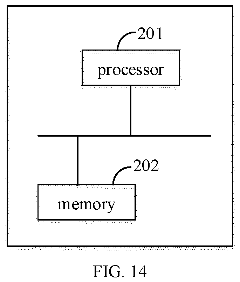

Referring to FIG. 14, FIG. 14 is a structural schematic diagram of a non-transitory computer-readable storage medium according to an embodiment of the present disclosure. In the present embodiment, a non-transitory computer-readable storage medium is provided and includes at least one processor 201 and a memory 202 communicatively connected to the at least one processor 201. The processor 201 may be connected to the memory 202 through a bus or in another manner.

The memory 202 stores instructions executable by the at least one processor 201. When executed by the at least one processor 201, the instructions cause the at least one processor 201 to perform the heating control method according to any one of the foregoing embodiments.

The processor 201 may also be referred to as a central processing unit (CPU). The processor 201 may be an integrated circuit chip having a capability of processing a signal. The processor 201 may further be a general processor, a digital signal processor (DSP), an application integrated circuit (ASIC), a field programmable gate array (FPGA), another programmable logical device, a discrete gate, a transistor logical device, or a discrete hardware component. The general-purpose processor may be a microprocessor, or the processor may be any conventional processor or the like.

The memory 202 may be a memory chip or a trans-flash (TF) card, which may store all information in the electronic atomization device, and inputted original data, computer programs, intermediate running results, and finally running results are all stored in the memory 202. The memory stores and reads out information according to a position specified by the controller. With the memory 202, the electronic atomization device has a memory function and can ensure normal working. In terms of usage, the memory 202 in the electronic atomization device may be divided into a main memory (internal memory) and an assistant memory (external memory). Further, there is a classification method of an external memory and an internal memory. The external memory is generally a magnetic medium or a compact disc which can store information for a long time. The internal memory refers to a storage part on a motherboard, which is configured to store data and program that are currently executed. However, the internal memory is merely configured to store program and data temporarily, and data will be lost if power level is off.

## Claims

1. A heating control method, applied to a heating element (101) of an electronic atomization device (100), comprising:
controlling (S11, S22) a temperature of the heating element (101) to increase to a first preset temperature in a first time period;
controlling (S12, S23) the heating element (101) to keep working under the first preset temperature in a second time period; and
controlling (S13, S24) the temperature of the heating element (101) to decrease from the first preset temperature to a second preset temperature in a third time period;
wherein the heating element (101) is controlled to operate at least two different power levels in the first time period and/or the second time period;
wherein the second time period, comprises the at least two different power levels being operated in the first time period;
**characterized in that** the heating element (101) is controlled to operate a constant power level in the third time period, and the constant power level ranges from 4.5 W to 5.5 W.

2. The heating control method according to claim 1, wherein the heating element (101) being controlled to operate at least two different power levels in the first time period and/or the second time period, further comprises:
the at least two different power levels being operated sequentially in a descending order in the first time period; and/or
the at least two different power levels being operated alternately in the second time period.

3. The heating control method according to claim 2, wherein the minimum heating power level in the first time period is greater than or equal to the maximum heating power level in the second time period.

4. The heating control method according to claim 1, wherein the heating element (101) is controlled to operate at least two different power levels in the first time period and/or the second time period comprises:
a range of the at least two different power levels being from 8 W to 11 W in the first time period; and/or
a range of the at least two different power levels being from 6 W to 7.5 W in the second time period.

5. The heating control method according to claim 1, wherein the heating element (101) is controlled to operate at least two different power levels in the first time period and/or the second time period comprises:
in the first period, the at least two different power levels being configured with the same or different heating durations; and/or
in the second time period, the at least two different power levels being configured with the same or different heating durations.

6. The heating control method according to claim 1,
wherein before the controlling the temperature of the heating element (101) to increase to the first preset temperature in the first time period, the method further comprises:
selecting (S21) a scheme from a plurality of schemes A1 to An, a scheme from a plurality of schemes B1 to Bn, and a scheme from a plurality of schemes C1 to Cn to form a heating scheme, wherein the plurality of schemes A1 to An are configured to control the heating element (101) to operate the at least two different power levels or a constant power level in the first time period, the plurality of schemes B1 to Bn are configured to control the heating element (101) to operate the at least two different power levels or the constant power level in the second time period, and the plurality of schemes C1 to Cn are configured to control the heating element (101) to operate in the third time period.

7. The heating control method according to claim 6, wherein the selecting the scheme from the plurality of schemes A1 to An, the scheme from the plurality of schemes B1 to Bn, and the scheme from the plurality of schemes C1 to Cn respectively to form the heating scheme comprises:
obtaining parameters of the electronic atomization device (100) or inhaling habit parameters of a user, wherein the parameters of the electronic atomization device (100) comprise a parameter of an atomizing substance or a parameter of an atomizer; and
selecting, based on the parameters of the electronic atomization device (100) or the inhaling habit parameters of the user, the scheme from the plurality of schemes A1 to An, the scheme from the plurality of schemes B1 to Bn, and the scheme from the plurality of schemes C1 to Cn to form the heating scheme.

8. The heating control method according to claim 7, wherein the inhaling habit parameters comprise a single inhaling duration.

9. The heating control method according to claim 8, after the controlling the temperature of the heating element (101) to decrease from the first preset temperature to the second preset temperature in the third time period, the method further comprising:
obtaining (S25) working parameters of the electronic atomization device (100) under the heating scheme; and
performing (S26) a self-learning process based on the working parameters of the electronic atomization device (100) under the heating scheme, to optimize an operation of selecting the scheme from the plurality of schemes A1 to An, the scheme from the plurality of schemes B1 to Bn, and the scheme from the plurality of schemes C1 to Cn to form the heating scheme.

10. The heating control method according to claim 1, wherein a duration of the first time period is less than or equal to 0.5 seconds; and a duration of the second time period or a duration of the third time period ranges from 2 seconds to 3 seconds.

11. The heating control method according to claim 1, a duration that the heating element (101) decreases from the first preset temperature to the second preset temperature is less than or equal to 0.6 seconds.

12. The heating control method according to claim 1, wherein a setting range of the first preset temperature is from 220°C to 320°C, and a setting range of the second preset temperature is from 220°C to 280°C.

13. An electronic atomization device (100), **characterized by** comprising:
a heating element (101), configured to heat an aerosol-generating substrate;
a power supply assembly (102), connected to the heating element (101) and configured to supply power to the heating element (101); and
a controller (103), connected between the power supply assembly (102) and the heating element (101), and configured to receive a starting instruction of a user and control the power supply assembly (102) to supply the power to the heating element (101) based on the starting instruction;
wherein the controller (103) is configured to perform the heating control method according to claim 1.

14. A non-transitory computer-readable storage medium, **characterized by** comprising:
at least one processor (201); and
a memory (202), communicatively connected to the at least one processor (201), and storing instructions executable by the at least one processor (201), wherein when executed by the at least one processor (201), the instructions cause the at least one processor (201) to perform the heating control method according to claim 1.

## Patentansprüche

1. Eine Heizsteuerungsmethode, die bei einem Heizelement (101) einer elektronischen Zerstäubungsvorrichtung (100) zur Anwendung kommt und Folgendes umfasst:
Steuerung (S11), S22) einer Temperatur des Heizelements (101) zwecks Erhitzen auf eine erste voreingestellte Temperatur im ersten Zeitraum:
Steuerung (S12, S23) des Heizelements (101), damit es mit der ersten, voreingestellten Temperatur im zweiten Zeitraum weiterarbeitet; und
Steuerung (S12, S24) der Temperatur des Heizelements (101) zwecks Senken der ersten voreingestellten Temperatur auf eine zweite voreingestellte Temperatur in einem dritten Zeitraum;
wobei das Heizelement (101) gesteuert wird, um mit mindestens zwei verschiedenen Leistungsstufen im ersten Zeitraum und/oder zweiten Zeitraum zu arbeiten;
wobei der zweite Zeitraum mindestens zwei verschiedene Leistungsstufen umfasst, mit denen im ersten Zeitraum gearbeitet wird;
**dadurch gekennzeichnet, dass** das Heizelement (101) gesteuert wird, um mit einer konstanten Leistungsstufe im dritten Zeitraum zu arbeiten und die constante Leistungsstufe zwischen 4,5 W und 5,5 W liegt.

2. Die Heizsteuerungsmethode gemäss Anspruch 1, bei der das Heizelement, das (101) gesteuert wird, um mit mindestens zwei verschiedenen Leistungsstufen im ersten Zeitraum und/oder zweiten Zeitraum zu arbeiten, weiter Folgendes umfasst:
Die mindestens zwei verschiedenen Leistungsstufen, die sequentiell in absteigender Reihenfolge im ersten Zeitraum betrieben werden; und/oder
die mindestens zwei verschiedenen Leistungsstufen, die abwechselnd im zweiten Zeitraum betrieben werden.

3. Die Heizsteuerungsmethode gemäss Anspruch 2, bei der die minimale Heizleistungsstufe im ersten Zeitraum grösser ist oder gleich der maximalen Heizleistungsstufe im zweiten Zeitraum.

4. Die Heizsteuerungsmethode gemäss Anspruch 1, bei der das Heizelement (101), das gesteuert wird, um mit mindestens zwei verschiedenen Leistungsstufen im ersten Zeitraum und/oder dem zweiten Zeitraum zu areiten, Folgendes umfasst:
Einen Bereich von den mindestens zwei Leistungsstufen von 8 W bis 11 W im ersten Zeitraum;
einen von den mindestens zwei Leistungsstufen von 6 W bis 7,5 W im zweiten Zeitraum.

5. Die Heizsteuerungsmethode gemäss Anspruch1, wobei die Steuerung des Heizelements (101) das Arbeiten mit mindestens zwei verschiedenen Leistungsstufen im ersten Zeitraum und/oder zweiten Zeitraum wie folgt umfasst:
Im ersten Zeitraum die mindestens zwei verschiedenen Leistungsstufen, die mit derselben oder einer anderen Heizdauer konfiguriert werden; und/oder
im zweiten Zeitraum die mindestens zwei verschiedenen Leistungsstufen, die mit derselben oder einer anderen Heizdauer konfiguriert werden.

6. Heizsteuerungsmethode gemäss Anspruch 1,
bei der vor der Steuerung der Temperatur des Heizelements (101), die bis auf die erste, voreingestellte Temperatur im ersten Zeitraum erhöht werden soll, die Methode weiter Folgendes umfasst:
Wahl (S21) eines Schemas aus vielzähligen Schemata A1 bis An, ein Schema aus vielzähligen Schemata B1 bis Bn und ein Schema aus vielzähligen Schemata C1 bis Cn, um ein Heizschema zu bilden, wobei die vielzähligen Schemata A1 bis An konfiguriert sind, um das Heizelement (101) zu steuern, damit es mindestens mit zwei verschiedenen Leistungsstufen arbeitet oder mit einer konstanten Leistungsstufe im ersten Zeitraum, wobei die vielzähligen Schemata B1 bis Bn konfiguriert sind, um das Heizelement (101) zu steuern, damit es mit mindestens zwei verschiedenen Leistungsstufen arbeitet oder mit der konstanten Leistungsstufe im zweiten Zeitraum arbeitet, und wobei die vielzähligen Schemata C1 bis Cn konfiguriert sind, um das Heizelement (101) zu steuern, damit es im dritten Zeitraum arbeitet.

7. Die Heizsteuerungsmethode gemäss Anspruch 6, bei der jeweils die Auswahl des Schemas aus den vielzähligen Schemata A1 bis An, des Schemas aus den vielzähligen Schemata B1 bis Bn und des Schemas aus den vielzähligen Schemata C1 bis Cn, um das Heizschema zu bilden, Folgendes umfasst:
Erhalt von Parametern der elektronischen Zerstäubungsvorrichtung (100) oder Parametern von Einatmungsgewohnheiten eines Gebrauchers, wobei die Parameter der elektronischen Zerstäubungsvorrichtunt (100) einen Parameter der Zerstäubungssubstanz oder einen Parameter eines Zerstäubers umfassen; und
Auswahl, basierend auf den Parameteern der elektronischen Zerstäubungsvorrichtung (100) oder der Einatmungsgewohnheiten des Gebrauchers, des Schemas aus den vielzähligen Schemata A1 bis An, des Schemas aus den vielzähligen Schemata B1 bis Bn und des Schemas aus den vielzähligen Schemata C1 bis Cn zwecks Bilden des Heizschemas.

8. Die Heizsteuerungsmethode gemäss Anspruch 7, wobei die Parameter der Einatmungsgewohnheit eine einzelne Einatmungsdauer umfassen.

9. Die Heizsteuerungsmethode gemäss Anspruch 8, bei der nach Steuerung der Temperatur des Heizelements (101) zwecks Senken der ersten, voreingestellten Temperatur auf die zweite voreingestellte Temperatur im dritten Zeitraum die Methode weiter Folgendes umfasst:
Erhalt (S25) von Arbeitsparametern des elektronischen Zerstäubungsvorrichtung (100) gemäss dem Heizschema; und
Ausführen (S26) eines selbstlernenden Verfahrens basierend auf den Arbeitsparametern der elektronischen Zerstäubervorrichtung (100) gemäss dem Heizschema, zwecks Optimierung eines Arbeitsganges für die Auswahl des Schemas aus den vielzahligen Schemata A1 bis An, des Schemas aus den vielzähligen Schemata B1 bis Bn und des Schemas aus den vielzähligen Schemata C1 bis Cn zwecks Bilden des Heizschemas.

10. Die Heizsteuerungsmethode gemäss Anspruch 1, bei der eine Dauer des ersten Zeitraumes geringer ist oder gleich 0,5 Sekunden; und eine Dauer des zweiten Zeitraumes oder Dauer des dritten Zeitraumes zwischen 2 und 3 Sekungen liegt.

11. Die Heizsteuerungsmethode gemäss Anspruch 1, bei der eine Dauer des Heizelements (101) während der die Temperatur von der ersten voreingestellten Temperatur auf die zweite voreingestellte Temperatur sinkt geringer ist als oder gleich 0,6 Sekunden.

12. Die Heizsteuerungsmethode gemäss Anspruch 1, bei der ein Einstellbereich der ersten voreingestellten Temperatur von 220°C bis zu 320°C beträgt, und ein Einstellbereich der zweiten voreingestellten Temperatur von 220°C bis zu 280°C beträgt.

13. Die elektronische Zerstäubungsvorrichtung (100), **dadurch gekennzeichnet, dass** sie Folgendes umfasst:
Ein Heizelement (101), das konfiguriert ist, um ein zerstäugungserzeugendes Substrat zu erhitzen;
eine Stromversorgungsgruppe (102), die an das Heizelement (101) angeschlossen und konfiguriert ist, um das Heizelement (101) mit Strom zu versorgen; und
einen Regler (103), der zwischen der Stromversorgungsgruppe (102) und dem Heizelement (101) angeschlossen und konfiguriert ist, um eine Einschaltanweisung eines Gebrauchers zu empfangen und die Stromversorgungsgruppe (102) zu regeln, damit dieselbe das Heizelement basierend auf den Einschaltanweisungen mit Strom versorgt;
wobei der Regler (103) konfiguriert ist, um die Heizsteuerungsmethode gemäss Aspruch 1 auszuführen.

14. Ein nicht transitorisches, computerlesbares Speichermedium **dadurch gekennzeichnet, dass** es Folgendes umfasst:
Mindestens einen Prozessor (201); und
einen Speidher (202) der kommunikativ mit mindestens einem Prozessor (201) verbunden ist, und Speicherungsanweisungen, die durch den mindestens einen Prozessor (201) ausführbar sind, wobei, wenn ddurch den mindestens einen Prozeccor (201) ausgeführt, die Anweisungen verursachen, dass die Heizsteuerungsmethode gemäss Anspruch 1 ausgrführt werden.

## Revendications

1. Un procédé de régulation du chauffage, appliqué à un élément chauffant (101) d'un dispositif électronique d'atomisation (100), comprenant :
la commande (S11, S22) d'une température de l'élément chauffant (101) pour qu'elle augmente jusqu'à une première température prédéfinie au cours d'une première période de temps ;
la commande (S12, S23) de l'élément chauffant (101) pour qu'il continue à opérer à la première température prédéfinie pendant une deuxième période de temps ; et
la commande (S13, S24) de la température de l'élément chauffant (101) pour passer de la première température prédéfinie à une deuxième température prédéfinie au cours d'une troisième période ;
dans lequel l'élément chauffant (101) est commandé pour fonctionner à au moins deux niveaux de puissance différents pendant la première période de temps et/ou la deuxième période de temps ;
dans lequel
la deuxième période de temps comprend au moins les deux niveaux de puissance différents appliqués au cours de la première période de temps ;
**caractérisé en ce que** l'élément chauffant (101) est commandé pour fonctionner à un niveau de puissance constant au cours de la troisième période, et que ledit niveau de puissance constant est compris entre 4,5 W et 5,5 W.

2. Le procédé de régulation du chauffage selon la revendication 1, dans lequel l'élément chauffant (101) est commandé pour opérer au moins à deux niveaux de puissance différents dans une première période de temps et/ou une deuxième période de temps, et qui comprend en outre :
l'exploitation séquentielle des au moins deux niveaux de puissance différents dans un ordre décroissant au cours de la première période de temps ; et/ou
l'exploitation alternative des au moins deux niveaux de puissance différents au cours de la deuxième période de temps.

3. Le procédé de régulation du chauffage selon la revendication 2, dans lequel le niveau minimum de puissance de chauffage pendant la première période de temps est supérieur ou égal au niveau maximum de puissance de chauffage pendant la deuxième période de temps.

4. Le procédé de régulation du chauffage selon la revendication 1, dans lequel l'élément chauffant (101) est commandé pour opérer au moins à deux niveaux de puissance différents pendant la première période de temps et/ou la deuxième période de temps, qui comprend ce qui suit :
une plage d'au moins deux niveaux de puissance différents allant de 8 W à 11 W au cours de la première période ; et/ou
une plage d'au moins deux niveaux de puissance différents allant de 6 W à 7,5 W au cours de la deuxième période.

5. Le procédé de régulation du chauffage selon la revendication 1, dans lequel l'élément chauffant (101) est commandé pour opérer au moins à deux niveaux de puissance différents au cours de la première période de temps et/ou de la seconde période de temps, comprend ce qui suit :
au cours de la première période de temps, les au moins deux niveaux de puissance différents sont configurés avec des durées de chauffage identiques ou différentes ; et/ou
au cours de la deuxième période de temps, les au moins deux niveaux de puissance différents sont configurés avec des durées de chauffage identiques ou différentes.

6. Le procédé de régulation du chauffage selon la revendication 1, dans lequel avant de commander la température de l'élément chauffant (101) pour qu'elle augmente jusqu'à la première température prédéfinie dans la première période de temps, le procédé comprend en outre :
la sélection (S21) d'un schéma parmi une pluralité de schémas A1 à An, d'un schéma parmi une pluralité de schémas B1 à Bn, et d'un schéma parmi une pluralité de schémas C1 à Cn, afin de constituer un schéma de chauffage, dans lequel la pluralité de schémas A1 à An est configurée pour réguler l'élément chauffant (101) afin qu'il fonctionne au moins à deux niveaux de puissance différents ou à un niveau de puissance constant au cours de la première période de temps, la pluralité de schémas B1 à Bn est configurée pour réguler l'élément chauffant (101) afin qu'il fonctionne avec au moins deux niveaux de puissance différents ou avec un niveau de puissance constant au cours de la deuxième période de temps, et la pluralité de schémas C1 à Cn est configurée pour réguler l'élément chauffant (101) afin qu'il fonctionne au cours de la troisième période de temps.

7. Le procédé de régulation du chauffage selon la revendication 6, dans lequel la sélection du schéma parmi la pluralité de schémas A1 à An, du schéma parmi la pluralité de schémas B1 à Bn, et du schéma parmi la pluralité de schémas C1 à Cn, respectivement, pour constituer le schéma de chauffage, comprend :
l'obtention des paramètres du dispositif électronique d'atomisation (100) ou des paramètres des habitudes d'inhalation d'un utilisateur, les paramètres du dispositif électronique d'atomisation (100) comprenant un paramètre d'une substance d'atomisation ou un paramètre d'un atomiseur ; et
la sélection, sur la base des paramètres du dispositif électronique d'atomisation (100) ou des paramètres des habitudes d'inhalation de l'utilisateur, du schéma parmi la pluralité de schémas A1 à An, du schéma parmi la pluralité de schémas B1 à Bn, et du schéma parmi la pluralité de schémas C1 à Cn pour constituer le schéma de chauffage.

8. Le procédé de régulation du chauffage selon la revendication 7, dans lequel les paramètres relatifs à des habitudes d'inhalation comprennent une durée d'inhalation unique.

9. Le procédé de régulation du chauffage selon la revendication 8, après la régulation de la température de l'élément chauffant (101) pour diminuer la température de la première température prédéfinie à la deuxième température prédéfinie au cours de la troisième période de temps, où le procédé comprend en outre : l'obtention (S25) des paramètres de fonctionnement du dispositif électronique d'atomisation (100) dans le cadre du schéma de chauffage ; et
l'exécution (S26) d'un processus d'auto-apprentissage basé sur les paramètres opérationnels du dispositif électronique d'atomisation (100) dans le cadre du schéma de chauffage, afin d'optimiser une opération de sélection du schéma parmi la pluralité de schémas A1 à An, du schéma parmi la pluralité de schémas B1 à Bn, et du schéma parmi la pluralité de schémas C1 à Cn pour constituer le schéma de chauffage.

10. Le procédé de régulation du chauffage selon la revendication 1, dans lequel la durée de la première période de temps est inférieure ou égale à 0,5 seconde ; et la durée de la deuxième période de temps ou la durée de la troisième période de temps est comprise entre 2 secondes et 3 secondes.

11. Le procédé de régulation du chauffage selon la revendication 1, dans lequel la durée pendant laquelle l'élément chauffant (101) passe de la première température prédéfinie à la deuxième température prédéfinie est inférieure ou égale à 0,6 seconde.

12. Le procédé de régulation du chauffage selon la revendication 1, dans lequel une plage de réglage de la première température prédéfinie est comprise entre 220°C et 320°C, et une plage de réglage de la seconde température prédéfinie est comprise entre 220°C et 280°C.

13. Dispositif électronique d'atomisation (100), **caractérisé en ce qu'**il comprend :
un élément chauffant (101), configuré pour chauffer un substrat générateur des aérosols ;
un bloc d'alimentation électrique (102), connecté à l'élément chauffant (101) et configuré pour alimenter l'élément chauffant (101) ; et
une unité de commande (103), connectée entre le bloc d'alimentation (102) et l'élément chauffant (101), et configurée pour recevoir une instruction de démarrage d'un utilisateur et pour commander le bloc d'alimentation (102) afin d'alimenter l'élément chauffant (101) en fonction de l'instruction de démarrage ;
dans lequel l'unité de commande (103) est configurée pour appliquer le procédé de régulation du chauffage selon la revendication 1.

14. Support de stockage non transitoire lisible par ordinateur, **caractérisé en ce qu'**il comprend :
au moins un processeur (201) ; et
une mémoire (202), connectée de manière communicative à au moins un processeur (201), et contenant des instructions exécutables par au moins un processeur (201), dans laquelle, lorsqu'elles sont exécutées par au moins un processeur (201), les instructions amènent au moins un processeur (201) à exécuter le procédé de régulation du chauffage selon la revendication 1.
